# EUROPEAN PATENT APPLICATION

(11) **EP 1 018 610 A2**
(43) Date of publication of application: **12.07.2000**
(21) Application number: 99830695.5
(22) Date of filing: 05.11.1999
(51) Int. Cl.: F16H 35/02

(54) **Mechanical transmission of epicycloid type**

(30) Priority: 05.01.1999 IT FI990002
(71) Applicant: Berti, Daniele, 50143 Firenze (IT)
(72) Inventor: Berti, Daniele, 50143 Firenze (IT)
(74) Representative: Martini, Lazzaro

(57) **Abstract**

The invention refers to a mechanical transmission of epicycloid type, comprising at least a pair of transmission members (A, C) rotating about relevant axes of rotation and kinematically connected to each other so that a first member is in revolution relationship with the second member; the profile of the transmission members (A, C) determining, cyclically, a variation of the distance between each one of the rotation axes and the portion of the relevant transmission member instantaneously engaged, that is, in direct contact with the other transmission member or with a means for connection therewith.

## Description

The present invention refers to a mechanical transmission of epicycloid type.

An epicycloid transmission consists mainly of at least two drive members such as toothed wheels, belt-connected pulleys, etc., the first of which rotates about its main axis, while the second, in addition to rotate about its own axis, is kinematically connected to the first, thereby performing a revolution motion about such first drive member.

Epicycloid transmissions are known to be made up of drive members of circular shape. For example, they comprise a driving central or sun gear with which one or more driven planetary pinions are made to mesh and which are, therefore, driven into rotation about their own axis and into a revolution motion about the sun gear.

The known epicycloid transmissions correlate circular motions and are currently used in the motorcar industry for the construction of gearboxes, having high gear ratios and limited overall dimensions, and of automatic speed gears as well.

A simple epicycloid mechanism has three inputs/outputs which are driven into circular motions; usually, one of the three inputs/outputs is so engaged as to allow the mechanism to correlate two circular motions. Automatic gears utilize a plurality of simple epicycloid mechanisms and, by means of servocontrolled brakes and clutches, there are obtained various configurations corresponding to different speeds.

The design of known epicycloid transmissions make it possible to achieve instantaneous, constant gear ratios and their use is currently limited to devices in which the instantaneous gear ratio must be kept strictly constant.

One object of the present invention is to extend the use of epicycloid transmissions to those allowing variable gear ratios, especially in the case of the correlation between uniform circular motions and reciprocating circular motions in view of a number of immediate applications.

This result has been achieved, according to the invention, by providing an apparatus having the features indicated in the characterizing part of claim 1. Further characteristics being set forth in the dependent claims.

The transmission in question comprises at least a pair of non-circular toothed wheels or equivalent drive members. In practice, in cases of gears, the non-circular wheels may have any general shape provided they can mesh, that is, to rotate with continuity while meshing with each other all the time and being supported by parallel shafts. In other words, the profile exhibited by the transmission members will determine, cyclically, a variation of the distance between each of the rotation axes and the portion of the relevant transmission member to be instantaneously connected. In case of toothed wheels, the point of contact between the wheels will be shifted during the rotation in the direction of the line that joins the axes. In case the pair of transmission members is made up of gears or pulleys connected by a driving chain or belt, it is the configuration instantaneously taken up by the driving chain or belt that will be cyclically changed.

The present invention makes it possible to correlate two or more circular motions in order to transform a uniform circular motion into a reciprocating circular motion, a reciprocating circular motion with constant amplitude into a reciprocating circular motion with variable amplitude, a uniform circular motion into a variable circular motion; moreover, a transmission according to the invention is relatively simple to make, cost-effective and reliable even after a prolonged service life.

These and other advantages and characteristics of the invention will be best understood by anyone skilled in the art from a reading of the following description in conjunction with the attached drawings given as a practical exemplification of the invention, but not to be considered in a limitative sense, wherein:
- Figs. 1a, 1b, 1c are schematic representations of possible configurations of transmission members made according to the present invention;
- Figs. 2a, 3a, 4a, 5a, 2b, 3b, 4b, 5b refer to four exemplary embodiments of transmission members according to the invention, which are shown, respectively, in section (Figs. 2a-5a) and in schematic (Figs. 2b-5b) views;
- Figs. 6a, 6b, 6c refer to a further embodiment of transmission members, according to the invention, which are shown, respectively, in longitudinal section (Fig. 6a) and in two cross-sections taken on lines b-b and c-c of Fig. 6a (Figs. 6b-6c);
- Figs. 7, 8, 9, 10, 11 refer to possible embodiments of the inventions, wherein the various components are shown schematically by means of functional blocks and segments;
- Figs. 12a, 12b, 12c refer to a possible embodiment of the present invention, which is shown in different scales in, respectively, an actuation arrangement (Fig. 12a), a longitudinal section view (Fig. 12b) and a schematic side view (Fig. 12c);
- Fig. 13 is a schematic side view of a further embodiment of the mechanical transmission in question, with some parts in longitudinal section;
- Figs. 14a, 14b refer to a further embodiment of the mechanical transmission in question, Fig. 14a being a schematic ensemble side view thereof, and Fig. 14b being a side view of a detail in which some parts are in longitudinal section and others are not to scale;
- Figs. 15a, 15b, 15c, 16a, 16b, 17a, 17b, 17c refer to the mechanical transmission in question being applied to an internal combustion engine for transforming the reciprocating motion of one or more pistons into the circular motion of the driving shaft; in particular, Fig. 15a is a schematic side view of a piston kinematically connected to the transmission in question, Fig. 15b shows the kinematic connection among the various transmission members and Fig. 15c is a schematic side view with some parts in longitudinal section;
- Fig. 16a is a schematic side view of a plurality of pistons kinematically connected to the transmission in question and Fig. 16b is a schematic side view with some parts in longitudinal section; Fig. 17a is a schematic side view, with some parts in longitudinal section, of a plurality of pistons kinematically connected to the transmission in question, while Figs. 17b and 17c are two schematic cross-section views taken on lines d-d and e-e of Fig. 17a;
- Figs. 18a and 18b are a sectional and schematic view, respectively, of a further exemplary embodiments of transmission members according to the invention.

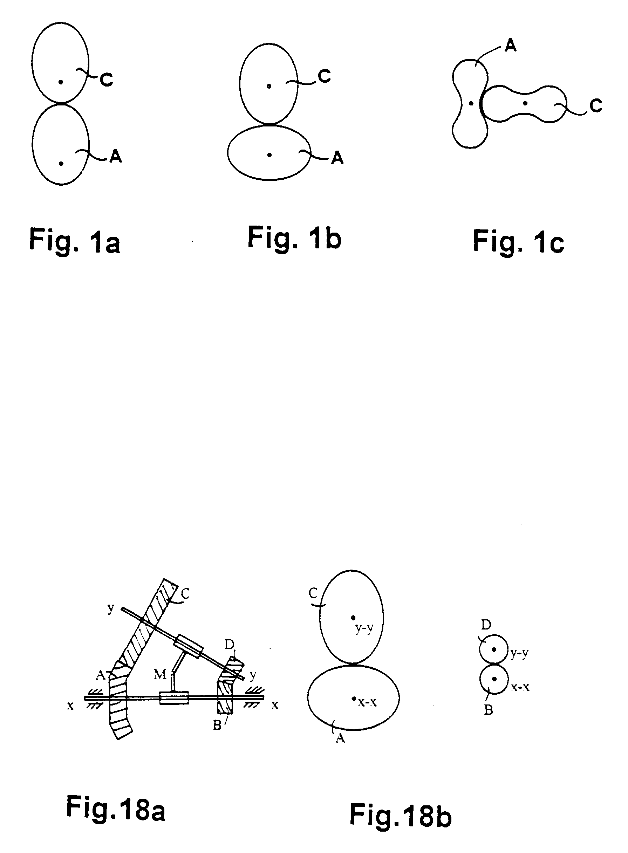

Illustrated in Fig. la is a pair of like elliptic gears with pivot point in corresponding of the focuses; a transmission thus constructed provided an instantaneous, non-constant gear ratio.
Elliptic gears with pivot point in correspondence of the focuses may give rise, upon fast rotations, to a condition of mass unbalance causing vibrations when no suitable balance of the pair is provided. In this view, in the description that follows particular stress will be given to such arrangements (without excluding other solutions) which provide for substantially elliptic wheels with pivot point in correspondence of the centre, like those represented in Fig. ib; these wheels may be made with slight modifications with respect to those of elliptic shape already known and currently manufactured.
To highlight the effects to be described later on, the substantially elliptic wheel must have a high ratio between the main axes; also a pair of gears of lobe shape being possibly used as illustrated in Fig. 1c.
However, specific shapes can also be developed which do not exhibit axes of symmetry.

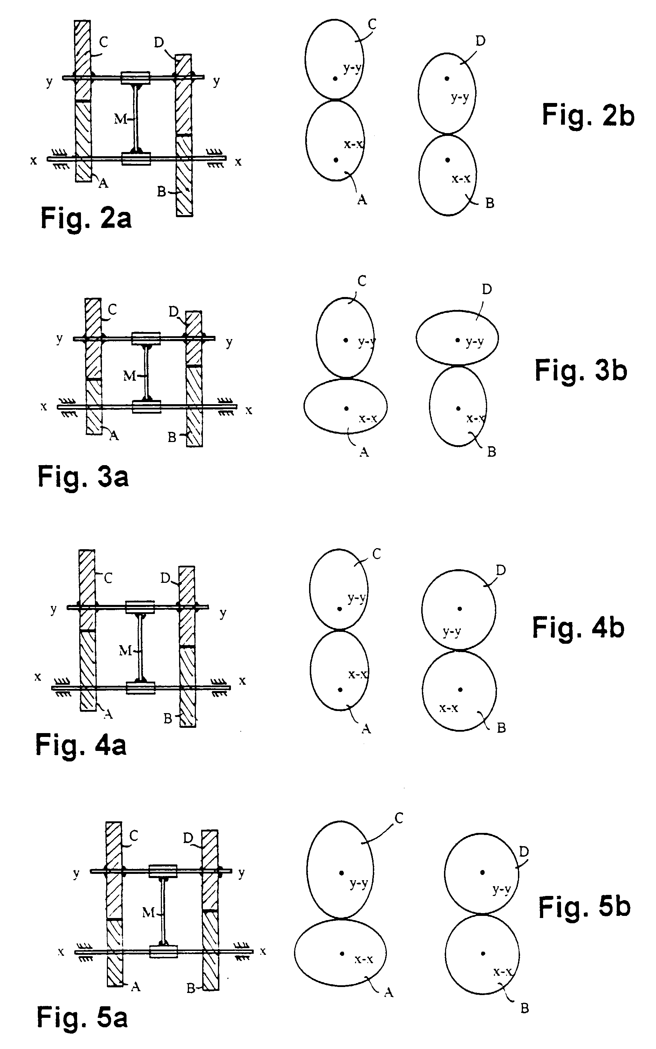

In practice, as previously set forth, the mechnaical transmission of epicycloid type, according to the invention, comprises at least a pair of non-circular wheels.
The pair of non-circular wheels (which may be either gears or pulleys and the like, the latter being connected by belts or chains) may be made up of coupled wheels of general shape, hinged at one focus or the centre according to their design. For example, a pivot point may provided at one focus or the centre.
In the transmission in question, two axes (x-x) and (y-y) are provided for their connection to a movable arm (M). In particular, with reference to Figs. 2a and 2b, the sun gears (A) and (B) may be elliptic, hinged at one focus, coaxial and independent; the planetary wheels (C) and (D) may be elliptic, hinged at one focus, coaxial and solid to each other, idly pivoting about the movable axis and exhibiting a phase shift of 180°.

Shown in the example of Figs. 3a and 3b are substantially elliptic wheels hinged at the centre, with the planetary wheels (C) and (D) being outphased by 90°; the phase shift between (C) and (D) may also be made variable, for example by means of an actuator, not shown in the drawings for the sake of clarity, positioned on the movable axis. In the Figs. 4a and 4b a pair of wheels (A, C) are elliptic with hinge point in the focus, whereas the other pair of wheels are circular with equal diameters; the diameters being possibly of different value.

The transmission illustrated in Figs. 5a and 5b is similar to that of Figs. 4a and 4b, with the wheels (A, C) being of substantially elliptic shape and hinged at the centre, and the wheels (D, B) being of circular shape and hinged at the centre.

Figs. 18a and 18b show a modified version with respect to the preceding cases, in which the planetary axis (y-y) is not parallel to the sun axis (x-x). In this case, the wheels (A) and (C) have a substantially elliptic profile, while the wheel (A) has a non-straight profile in order to mesh with thw wheel (C) disposed on an unparallel axis.
The number of planetary axes in the above indicated figures may be increased to have the gears loaded to a higher or lesser degree and to balance the moving masses.

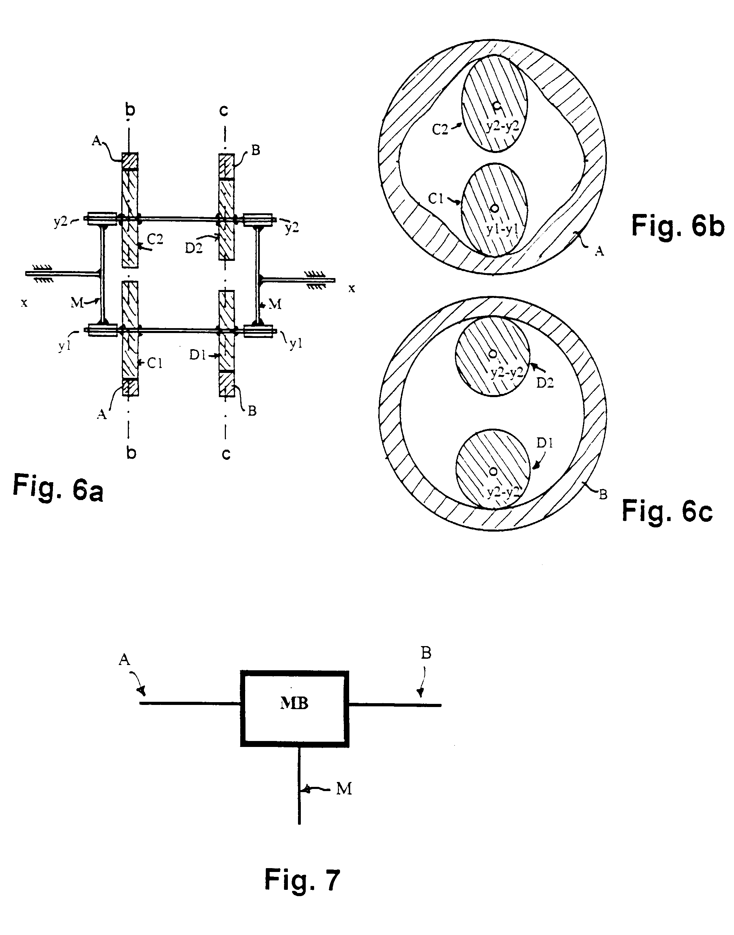

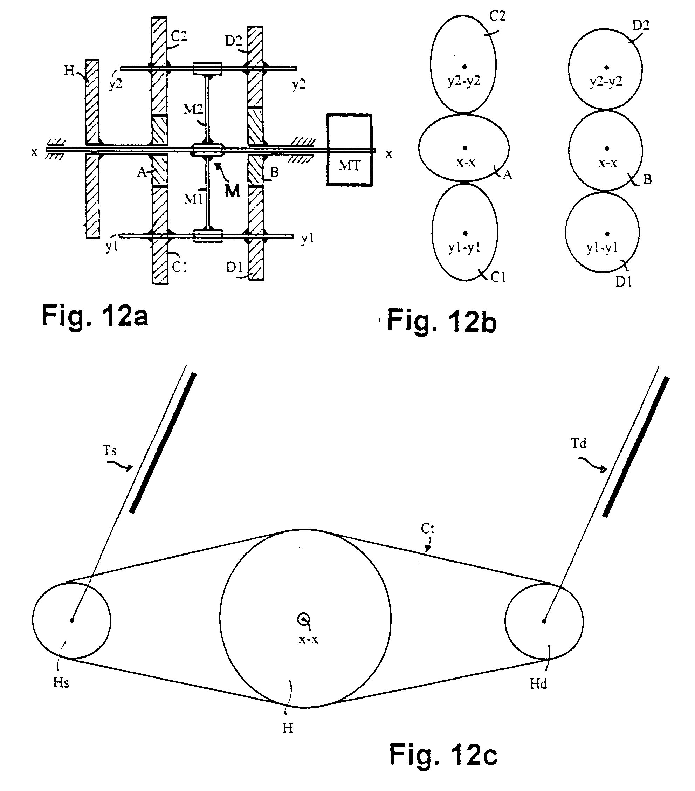

Figs. 6a-6c show a modified version of the preceding arrangements, with crowns external to planetary gears in place of internal sun gears; in this case, the transmission may also be defined as of hypocycloid type. The external crowns (A) and (B) rotate about the sun axis (x-x) without being directly engaged thereto and are so shaped as to mesh to respective planetary wheels (C1, C2) and (D1, D2) which are disposed on planetary axes (y1-y1) and (y2-y2). As in the previous cases, the planetary wheels are idle on the planetary axes but each one is engaged to the other located on the same axis. The planetary axes are connected by cranks (M) to the sun axis (x-x). In the example of Figs. 6a-6c, the planetary wheels are not to scale, and the number of wheels per crown is limited to two in order to facilitate the reading of the scheme. In a real transmission, the planetary wheels would be in a more suitable number, such as three, for example, likewise the corresponding epicycloid mechanisms with circular wheels currently available.

Represented in Fig. 7 is a diagram relevant to a generic transmission according to the invention and exhibiting three inputs/outputs; with reference to the previously described examples, (A) and (B) represent the connections with the two sun gears or crowns (A) and (B), and (M) is the connection with the crank (M) .
The three inputs/outputs of the transmission in question may correlate three circular motions, with the possibility of combining recipricating motions with uniform motions; one of the three inputs/outputs may be constrained in a stiff or elastic or viscous or inertial manner, etc., thereby obtaining a kinematic connection metching two circular motions.
By combining more basic transmissions of a type similar to the one previosuly described, a complex transmission can be achieved which provides for two or more circular motions mutually related.
As set forth above, the mechanism is of epicycloid type: accordingly, it has a first fixed axis and a second axis which rotates about the first.
Using at least a pair of non-circular wheels in a epicycloid transmission makes it possible to obtain distinct series of correlations between circular motions; one of these motions is represented by the case in which the axes are fixed.
In particular, it is possible to match a uniform motion to a circular one with reversal of direction of rotation.
In the examples that follow, the meshing gears have equal dimensions unless otherwise indicated.

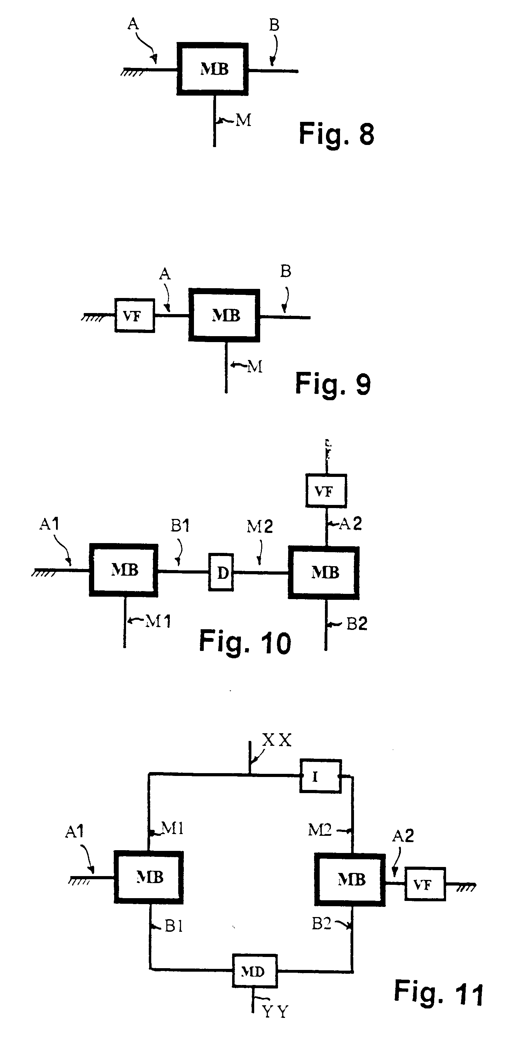

Diagrammatically represented in Fig. 8 is basic transmission (MB) wherein the gear (A) is rigidly engaged. By driving the crank (M) into a uniform circular motion, the wheel (B) moves with non-uniform circular motion; the circular motion of (B) reciprocates about a fixed position.

Fig. 9 shows diagrammatically a basic transmission (MB) in which the gear (A) is engaged in a stiff but variable fashion by means of a phase variator (VF). By driving the gear (B) into rotation, according to the position or phase of the gear (A), largely variable instantaneous transmission ratios are obtained between the crank (M) and the gear (B).

Fig. 10 shows diagrammatically a combination of the two actions above indicated: the gear (A1) is blocked and the crank (M1) is moved with uniform circular motion, while the gear (B1) moves with reciprocating circular motion. A reduction gear (D) applied to the crank (M2), and intended to limit the amplitude of the oscillations, allows the same crank (M2) to move with a reciprocating motion of small amplitude and, provided the position of gear (A2) is adjusted by a phase variator (VF), B2 will be subjected to reciprocating circular motions of small amplitude upon any variation of the phase of (A2).

Fig. 11 shows in diagram form the combination of two transmissions (MB) wherein if (XX) moves with uniform circular motion, the crank (M1) moves with the same motion. By means of an inverter (I), the crank (M2) is made to move with a motion in opposite direction with respect to (M1). The gear (A1) is blocked, while the gear (A2) has a position being set by the phase variator (VF); the gears (B1) and (B2) are moved with reciprocating circular motion of opposite direction and with a variable phase shift set by the phase variator (VF). By applying the motions of (B1) and (B2) to the inputs of a differential device (MD), an output reciprocating motion is obtained with symmetrical oscillations whose amplitude is set by (VF) from a maximum value, when the input motions are suitably outphased, to a zero amplitude when the input motions are in phase.

In case the basic transmission (MB) has meshing wheels of different diameters, correlations of higher complexity are obtained than those previously discussed. For example, if a transmission exhibits two equal, substantially elliptic meshing wheels and two circular wheels, qualitatively different effects are obtained depending on the diameter of the circular wheels.

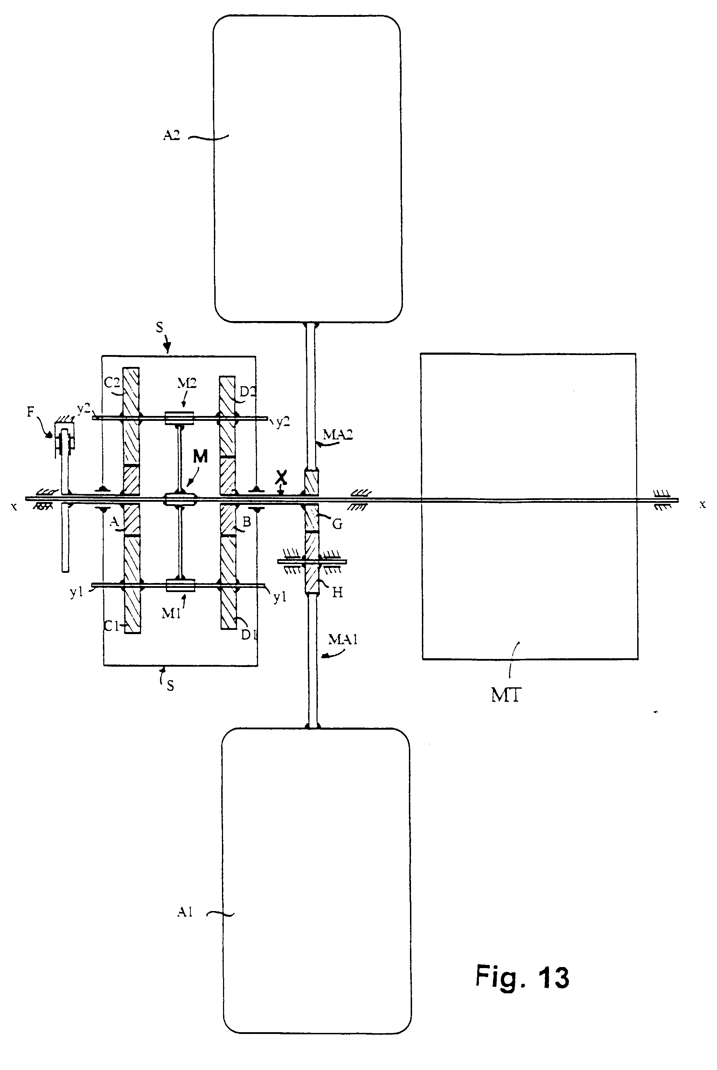

With reference to Fig. 8 and supposing the wheels are equal, if the gear (A) is blocked and the crank (M) is driven into a uniform circular motion, then the gear (B) will move with reciprocating circular motion. If the circular gears have different diameters, the gear (B) will move with a motion having a uniform component and a reciprocating component; in case the uniform component prevails, the circular motion is non-uniform and with no reversal.
Possible applications of the above described effects can be obtained in various fields, for example, in an internal combustion engine, in a machine with a swinging wing, in a windshield wiper for vehicles, and whenever the need arises for correlating a uniform circular motion and a reciprocating circular motion or a reciprocating component thereof.
With reference to Figs. 12a-12c, the present transmission makes it possible to actuate the rods of a windshield wiper through the circular motion of an electric motor (MT). In the illustrated example, the two planetary axes (y1-y1) and (y2-y2) are opposite to one another and operate in parallel to balance the masses; the wheels (A), (C1) and (C2) are substantially elliptic and hinged at the centre; the wheels (B), (D1) and (D2) are circular and of the same diameter for saving purposes; each one of the planetary wheels (C1, C2, D1, D2) is solid to the other being disposed on the same axis, but the planetary wheels on a same axis are in idle relationship therewith; the crank (M) is solid to the axis (x-x); the sun gear (A) is idle on the axis (x-x) and solid to the wheel (H); the sun gear (B) is idle on the axis (x-x) and blocked. The motor (MT) transmits the circular motion to the cranks (M1) and (M2) ; since the wheel (B) is blocked, the wheel (A) is moved (through the motion of the planetary wheels C1 and C2 engaged therewith) with reciprocating circular motion and transmits this motion to the wheel (H) solid thereto, the latter wheel, in turn, transmits the same motion to the wheels (Hs) and (Hd) via a chain (Ct) ; connected to the wheels (Hs) and (Hd) are the windshield wipers (Ts) and (Td) which are driven into reciprocating motion.

Shown schematically in Fig. 13 is a swinging wing machine. In this exemplary embodiment, (y1-y1) and (y2-y2) indicate two planetary axes disposed opposite to one another and operating in parallel to balance the masses; the wheels (A), (C1) and (C2) are substantially elliptic and centrally hinged, whereas the wheels (B), (D1) and (D2) are circular and of the same diameter for saving purposes; each one of the planetary wheels (C1, C2, D1, D2) is solid to the other being disposed on the same axis (C2 with D2 and C1 with D1), the planetary wheels on a same axis being in idle relationship therewith; the sun gear (A) is idle on the axis (x-x) and connected to a brake (F); the sun gear (B) is idle on the axis (x-x) and solidly connected with a circular gear (G) also disposed on the axis (x-x); a box (S) may be provided for containing and stiffening the transmission, idly connected to the axis (x-x) and with the axes (y1-y1) and (y2-y2) having pivot points on its sides. This box (S) may act as a flywheel by rotating solidly with the crank (M). The circular motion produced by the motor (MT) acting on the axis (x-x) is transmitted to the crank (M) and the box (S), if any. Since the gear (A) is blocked by the brake (F), the gear (B) is driven into an asymmetric resiprocating motion and tramits this motion to the wings (A1) and (A2) via the hollow shaft (X), the gears (G) and (H) and the rods (MA1) and (MA2). Owing to the waveform of the oscillations of the wings, oscillations which are asymmetric in the vertical plane, and due to the fact that the lift is also a function of the wing's speed to the second or higher power, it is deemed it possible to obtain a lift also in the case the wings have the same aerodynamic cofficient in both directions. Moreover, the phenomena occurring under a subsonic regime are thought to differ remarkably from those arising when, in correspondence of one or more sites of the wing surface, the speed shifts to the supersonic regime.

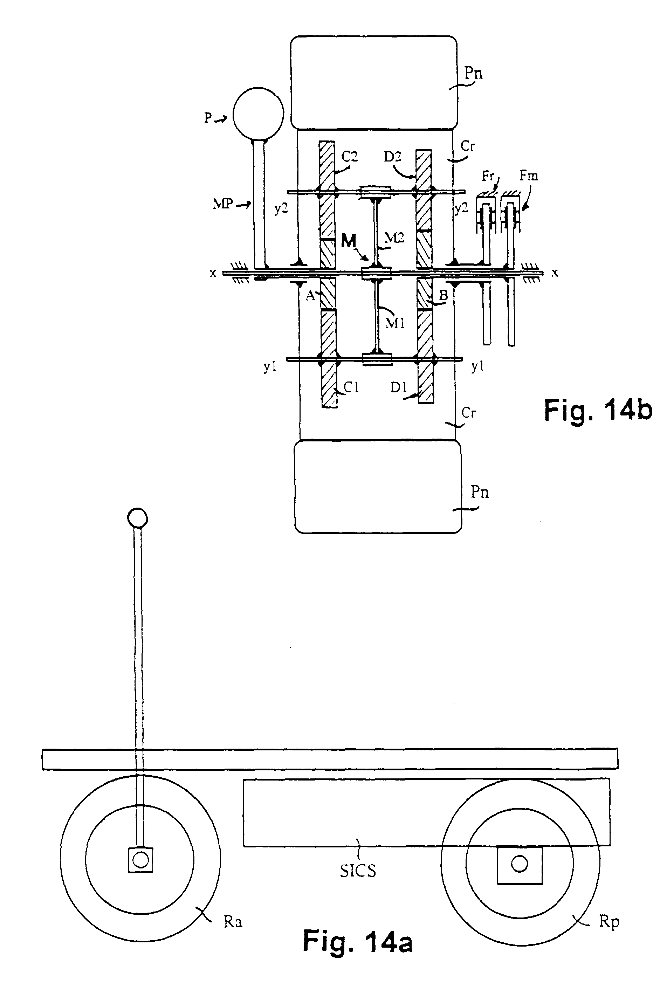

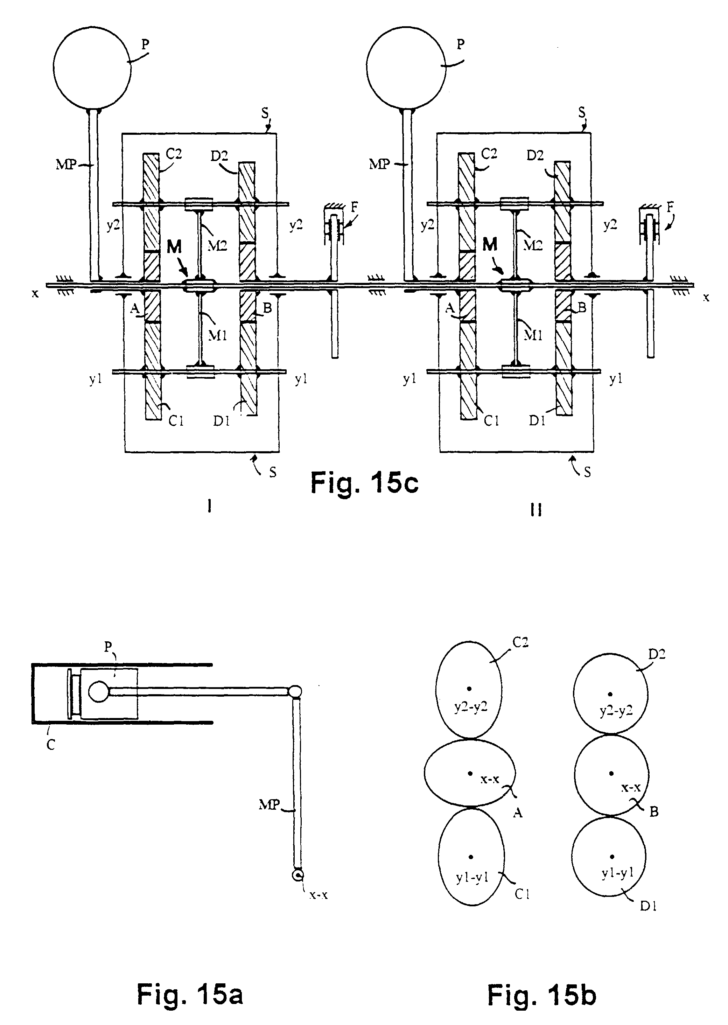

Figs. 14a and 14b relate to a motorvehicle in which an epicycloid transmission of the type in question applies the motion directly to the piston of the rear wheel. In this example, the planetary axes (y1-y1) and (y2-y2) are in number of two and disposed opposite to each other in order to balance the masses and to operate in parallel. The wheels (A), (C1) and (C2) are substantially elliptic and centrally hinged. The wheels (B), (D1) and (D2) are circular and have the same diameter. Each one of the planetary wheels (C1, C2, D1, D2) is solid to the other disposed on the same axis (C2 with D2 and C1 with D1), the planetary wheels on a same axis being in idle relationship therewith; the cranks (M1) and (M2) are solid to each other and idle on the axis (x-x). The sun gear (A) is idle on the axis (x-x) and connected to the piston (P) by the rod (MP). The sun gear (B) is idle on the axis (x-x) and connected to the brake (Fm). The rim (Cr) of the rear wheel (Rp) which holds and stiffens the transmission is idle about the axis (x-x), has the axes (y1-y1) and (y2-y2) hinged on its sides and rotates solid with the crank (M), thereby transmitting the motion to the tire (Pn). During the operation of the engine, that is, when the piston (P) is moved with straight reciprocating motion, the gear (A) is driven into a reciprocating circular motion due to its connection with the crank (MP) of the piston. The motion of gear (A) is transmitted to the two planetary gears (C1) and (C2) which, as previously mentioned, are solid to the gears (D1) and (D2), respectively. By keeping the brake (Fm) activated, the gear (B) is blocked and the two planetary gears (D1) and (D2) meshing therewith are caused to move relative thereto by performing a rotation about the gear (B). For this reason, also the planetary axes (y1-y1) and (y2-y2) rotate about the sun axis (x-x) and, as a consequence, the rear wheel (Rp) of the vehicle is driven into motion because of the planetary axes being fixed laterally to the rim (Cr). The rim (Cr) is also connected to a brake (Fr) which, once activated, has the function of braking the wheel (Rp). Deactivating the brake (Fm) above described allows the piston (P) to move with no relation to the motion of the wheel (Rp), thereby virtually replacing the clutch. In order to run the engine idly, provision may be made, for example, for either a linear spring (not shown) in axial alignment with the piston, or a torsion spring (not shown) connected to the crank (MP) and allowing the fuel-compression cycle within the engine's cylinder.
The motorvehicle of the example is completed by a front driving wheel (Ra); the block (SICS) in the schematic representation indicating the whole of the fuel tank, injection system, cylinder-piston, exhaust system, etc.
With reference to the example of Figs. 15a-15c, the reciprocating motion of the piston (P) may be applied to a rod (MP) of the piston (P), said rod being rigidly connected to an input (A) of the general basic transmission (MB). To balance the moving masses, the two planetary shafts (y1-y1) and (y2-y2) are disposed opposite to each other; the dual crank (M1) and (M2) making up the crank (M), is engaged with the sun driving shaft (x-x) and rotating solid thereto. The gear (B) is rigidly connected to a brake (F) the activation of which locks the gear (B) in a preset position allowing it to be connected to the crank (M). The sun gears (A) and (B) are idle on the driving shaft (x-x) on which the crank (M) is engaged, as previously described. The crank (M) is subdivided into two arms, the cranks (M1) and (M2) which, instead, are idle with respect to the planetary shafts (y1-y1) and (y2-y2). The planetary gears (C1, C2, D1, D2) are keyed on the respective planetary shafts. For a stiffening of the transmission, provision may be made for a stiff box-like structure (S) being idle on the driving shaft (x-x) and able to act also as a flywheel as it moves solid with the dual crank (M1) and (M2).
The connections above described allow a reciprocating circular motion of the gear (A), the latter being connected to the linearly reciprocating piston (P), to give rise to corresponding circular motion of the driving shaft. Small displacements of the position of the gear (B) make it possible to vary the compression ratio also in a continuous manner, with the aid of a knock probe and a servocontrol, in view, for example, of exploiting as much as possible the antiknock value of the fuel in a gasoline engine. The possibility of optimizing the displacement, speed and acceleration of the piston, might also give a higher efficiency with respect to the typical crank-connecting rod mechanism. Moreover, no side thrust is exerted upon the piston thereby avoiding friction losses, cylinder's ovalization and second-order vibrations.
In addition to this, on a same driving shaft (x-x) there may be disposed more transmissions of the type so far described to obtain a pluricylinder, two or four-stroke, gasoline or diesel engine in which each cylinder may be either activated or deactivated, as necessary, by the brake even when in motion, thereby obtaining in practice modular, differently supplioed engines. In Fig. 15c, two of these modules are indicated by I and II.

By using modified versions of the basic transmission different results may be obtained. For example, the gear (B) may be fitted in a manner other than the rigid one provided by the brake (F). According to a possible embodiment, the gear (B) may be elastically engaged to have a constraint force proportional to its rotation.
According to a further embodiment, use may be made of a viscous constraint which results proportional to the angular velocity; the gear (B) may also be connected to a mass for a constraint proportional to the angular acceleration. Further effects may be achieved by connecting between them the planetary gears located on the same axis via an elastic shaft.

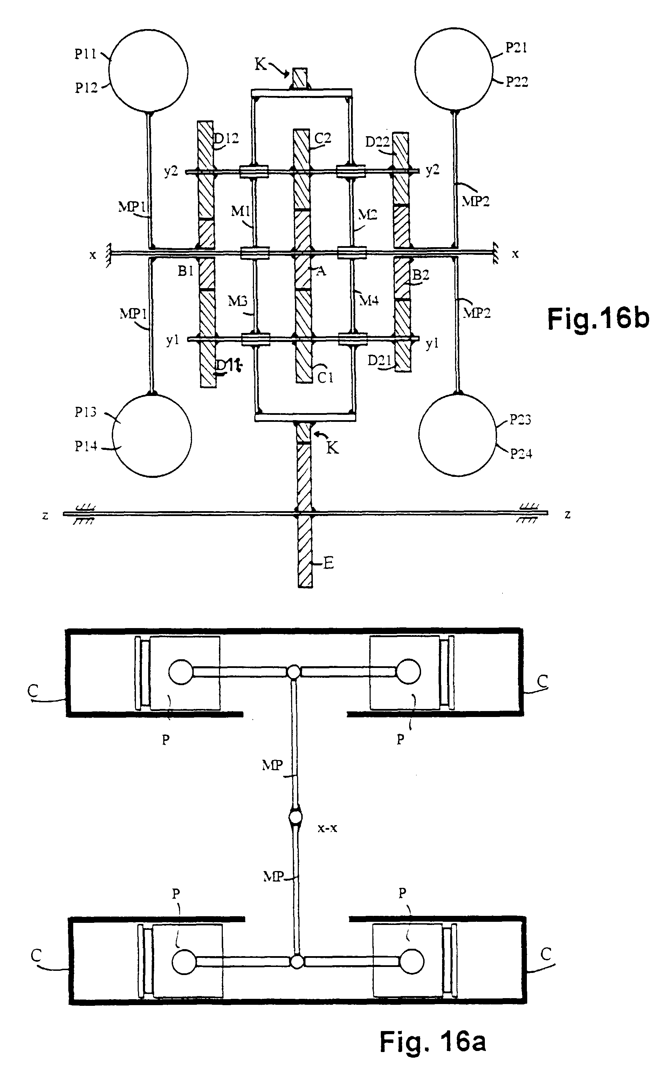

Diagrammatically represented in Figs. 16a and 16b is a four-stroke internal combustion engine with eight cylinders connected to a transmission which is a step forward with respect to the basic transmission. The sun gears are in number of three: a central one (A) of circular shape and axially keyed on the axis (x-x), and two lateral ones (B1) and (B2) which are substantially elliptic, with fulcrum in the centre, idle on axis (x-x) and offset to each other. The planetary gears are in number of two and opposite to each other for any sun gear, so as to balance the masses; the side gears (D11, D12, D21, D22) are substantially elliptic and with fulcrum at the centre, while the central ones (C1) and (C2) are circular with fulcrum also at the centre. Connected to each side sun gear (B1, B2) via respective rods (MP) are four pistons (P), as best visible in Fig. 16a. The gears disposed on each planetary axis (y1-y1) and (y2-y2) are idle with respect to the cranks (M), but solid to each other during rotation about their own axis. The cranks (M) are connected to a crown (K) which also acts as a flywheel and as a stiffening member as well; the crown (K) transmits the circualr motion to the gear (E) solid with the output axis (z-z).
When the pistons move (with reciprocating motion), the gears (B1) and (B2) move out-of-phase with reciprocating motion, by driving the cranks, solid between them, with continuous circular motion.
Since the engine is of four-stroke type, in each group of four cylinders, the pistons move outphased of a whole number of cycles and the ignitions may be set to take place in a suitable sequence (for example, 1-2-3-4) thereby distributing over the time the instantaneous torque on the driving shaft (z-z); for the same reason, the ignitions of one group of four cylinders will be outphased with respect to those of the other group.
In designing the individual combustion chambers and the devices for injecting the fuel into the same chambers it is possible to take into account the differences of speed of the pistons upon the various cycles.
Without substantially modifying the scheme above illustrated, it is possible to reduce the number of cylinders, and the engine may be of two-stroke gasoline or diesel type. In case the engine is still of two-stroke eight-cylinder type, the cylinders are activated in pairs.
The movement of the pistons can be possibly optimized by adding elements to the above design or using non-circular, suitably shaped gears especially for the wheels (K) and (E).

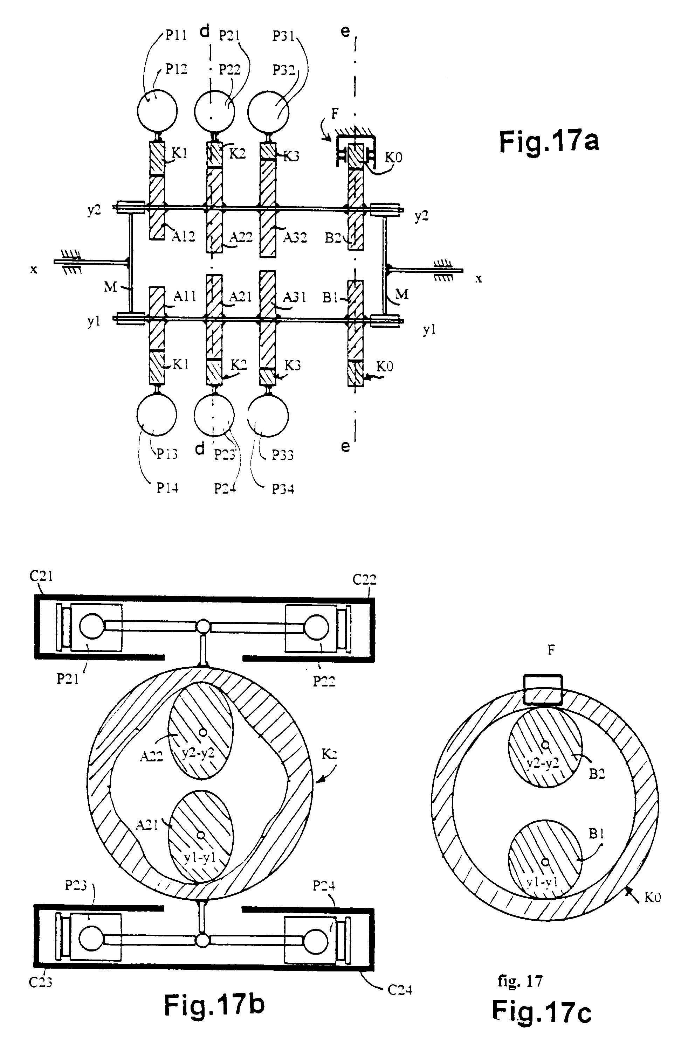

Schematically represented in Figs. 17a-17c is a four-stroke internal combustion engine with 12 cylinders. In this embodiment use is made of a crown transmission that may be considered evolutionary with respect to that represented in Figs. 6a-6c. The cylinders are in number of 12, but more cylinders may be added in series or reduced down to one only, and the cycles may be two or four, without substantially modifying the design. In this case too, as in the example relative to the eight-cylinder engine above described, when designing the combustion chambers and ignition devices, consideration is possibly given to the speed of pistons in the various cycles. In practice, each cylinder may be dimensioned by taking into account the different speed of the pistons, or it is possible to normalize the motions of the pistons and the geometry of the combustion chambers by arranging, for example, the various pistons at different distances from the axis (x-x) and at suitable inclinations, or by providing further elements.
It is possible to drive the axis (x-x) into a continuous circular motion by transmitting the motion of rotation of the dual cranks (M) to the planetary axes (y1-y1) and (y2-y2). Rotating on these axes are the planetary circular gears (B1) and (B2) and the substantially elliptic planetary gears (A21), (A22), (A31), (A32) hinged at the center and each idly rotating on its relevant axis but solid with all the other gears disposed on the same axis. The planetary gears are connected to the crowns (K0), (K1) , (K2), (K3); the crown (K0) is lockable by the brake (F) and, to each of the crowns (K1), (K2) and (K3) 4 pistons are connected which are ignited by tunrs; the elliptic gears bein outphased between them to provide ignitions in the engine's pistons at regular intervals.
The pistons motion can be possibly optimized by adding elements to the above design or using non-circular, suitably shaped gears.
In this case too, the advantages offered by the present solution include lack of side frictions on the pistons and, owing to the absence of the connecting rod, the engines result more compact.

## Claims

1. Mechanical transmission of epicycloid type, comprising at least a pair of transmission members (A, C) rotating about relevant axes of rotation and kinematically connected to each other so that a first member is in revolution relationship with the second member; characterized in that the profile of the transmission members of said pair (A, C) determines, cyclically, a variation of the distance between each one of the rotation axes and the portion of the relevant transmission member instantaneously engaged, that is, in direct contact with the other transmission member or with a means for connection therewith.

2. Transmission according to claim 1, wherein said pair of transmission members (A, C) is made up of gears in meshing engagement, characterized in that the meshing point of said gears is cyclically movable along the direction defined by a line joining the respective axes of rotation of said gears (A, C).

3. Transmission according to claim 1, wherein said pair of transmission members (A, C) is made up of gears or pulleys connected either by a driving chain or a belt, characterized in that the instantaneous shape taken up by said driving chain or belt is cyclically variable.

4. Transmission according to claim 1, characterized in that the transmission members (A, C) of said pair have a substantially elliptic profile.

5. Transmission according to claim 1, characterized in that the transmission members (A, C) of said pair have a lobe-like profile.

6. Transmission according to claim 1, characterized in that the transmission members (A, C) of said pair are hinged at their relevant centre.

7. Transmission according to claim 1, characterized in that the transmission members (A, C) of said pair is hinged in correspondence of their relevant focus.

8. Transmission according to claim 1, characterized in that it comprises a first (A) and a second (B) sun gears, the first (A) of which belongs to said pair of transmission members (A, C), said sun gears being supported by a sun shaft whose axis (x-x) is parallel to that (y-y) of a planetary shaft carrying a first (C) and a second (D) planetary gears, the first (C) of which is the other transmission member (C) of said pair (A, C).

9. Transmission according to claim 8, characterized in that said second gears (B, D) have circular profile.

10. Transmission according to claim 8, characterized in that the axis (x-x) of said sun shaft is parallel to the axis (y-y) of said planetary shaft.

11. Transmission according to claim 8, characterized in that said second gears (B, D) have circular profile.

12. Transmission according to claim 8, characterized in that the axis (x-x) of said sun shaft is incident over the axis (y-y) of said planetary shaft.

13. Transmission according to claim 8, characterized in that said second gears (B, D) have a substantially elliptic profile.

14. Transmission according to claim 8, characterized in that said planetary gears (C, D) are outphased between them.

15. Transmission according to claim 1, characterized in that a first transmission member (A) of said pair (A, C) is made up of an internally toothed wheel (A) in meshing engagement with two substantially elliptic planetary gears (C1, C2) supported by respective shafts whose axes (y1-y1, y2-y2) are parallel and inside said circular crown (A) and connected by rigid arms or cranks (M) supported on a sun axis (x-x).

16. Transmission according to claim 15, characterized in that provision is made for a second internally toothed wheel (B) meshing with two planetary gears (D1, D2) supported by the same shafts of said elliptic planetary gears (C1, C2).

17. Transmission according to claim 1, characterized in that it comprises a first sun gear (A) rigidly engaged to a fixed point.

18. Transmission according to claim 1, characterized in that it comprises a first sun gear (A) rigidly engaged to a fixed point in a variable fashion by means of a phase transformer (VF).

19. Transmission according to claim 1, characterized in that it comprises a first pair of sun gear (A1, B1) and a relevant crank (M1), connected to a second pair of sun gears (A2, B2) via a reduction unit (D) disposed and acting between a gear (B1) of the first pair and a crank (M2) of the second pair (A2, B2)

20. Transmission according to claim 1, characterized in that it comprises, disposed and acting between an inlet connection (XX) and an output connection (YY), a first pair of sun gears (A1, B1) exhibiting a relevant first crank (M1) and a second pair of sun gears (A2, B2) exhibiting a relevant second crank (M2), a first gear (A1) of said first pair (A1, B1) being rigidly engaged and a first gear (A2) of said second pair (A2, B2) being rigidly engaged via a phase transformer (VF), provision being made for an inverter device (I) disposed between said inlet connection (XX) and said second crank (M2) and a differential device (MD) disposed between the second gear (B1) of said first pair (A1, B1), the second gear (B2) of said second pair (A2, B2) and said output connection (YY) .
